(19) Europäisches Patentamt
European Patent Office
Office européen des brevets

(11) Publication number: **0 083 049**
**A2**

(12) **EUROPEAN PATENT APPLICATION**

(21) Application number: 82111781.9

(51) Int. Cl.$^3$: C 08 L 71/04

(22) Date of filing: 18.12.82

(30) Priority: 28.12.81 US 334639

(43) Date of publication of application: 06.07.83 Bulletin 83/27

(84) Designated Contracting States: DE FR GB IT NL

(71) Applicant: GENERAL ELECTRIC COMPANY
1 River Road
Schenectady New York 12305(US)

(72) Inventor: Cooper, Glenn Dale
42 The Crossway
Delmar New York 12054(US)

(72) Inventor: Haaf, William Robert
19 Scotch Pine Drive
Voorheesville New York 12186(US)

(72) Inventor: Lee, Gim Fun, Jr.
11 Drawbridge Drive
Albany New York 12203(US)

(74) Representative: Schüler, Horst, Dr. European Patent Attorney et al,
Kaiserstrasse 41
D-6000 Frankfurt/Main 1(DE)

(54) **Composition of PPE and PS-grafted EPDM and plasticizer.**

(57) An improved thermoplastic composition comprising an admixture of polyphenylene ether resin, an alkenyl aromatic resin which is modified with a rubbery interpolymer of ethylene, an alpha-olefin and polyene(for example, EPDM-modified polystyrene), a plasticizer and optionally a polystyrene homopolymer, is described.

EP 0 083 049 A2

COMPOSITION OF PPE AND PS-GRAFTED EPDM AND PLASTICIZER

10152-8CN-3162

## Background of the Invention

Thermoplastic compositions containing polyphenylene ether (or oxide) in admixture with alkenyl aromatic resins are well-known. Examples are, for example, described in U.S. Patent No. 3,383,435 of Eric P. Cizek, the disclosure of which is incorporated herein by reference. Such compositions are most generally employed in the production of molded and/or extruded articles.

Polyphenylene ethers are known and described in numerous publications including U.S. Patent Nos. 3,306,874 and 3,306,875 of Allan S. Hay and U.S. Patent Nos. 3,257,357 and 3,257,358 of Gelu Stoeff Stamatoff. The high molecular weight polymers are high performance engineering thermoplastics possessing relatively high melt viscosities and softening points - i.e., in excess of 275°C. - and are useful for many commercial applications requiring high temperature resistance including formation of film, fiber and molded articles.

For many uses, the high performance properties are not necessary and the relatively high melt viscosities and softening points are a disadvantage. For example, film and fiber can only be formed on a commercial scale from solution; melt processing being commercially unattractive because of the required high temperatures

needed to soften the polymer and the problems associated therewith such as instability, discoloration and the requirement for specially designed process equipment to operate at elevated temperatures. Molded articles can be formed by melt processing techniques, but again, the high temperatures required are undesirable.

Because of low cost and an overall combination of fair to good properties, alkenyl aromatic resins such as polystyrene have found wide and diversified commercial acceptance. However, such resins are usually brittle, possess a relatively low heat distortion temperature and have relatively poor resistance to the more common organic solvents. It is known in the art that various of these properties of alkenyl aromatics may be improved by copolymerizing with other monomers or by blending with other resins.

As is also described in the Cizek patent, modifiers such as butadiene may be incorporated into the alkenyl aromatic resins to improve the properties of resultant compositions. Such modified resins provide means for overcoming various physical drawbacks of alkenyl aromatic resins, particularly polystyrene, while simultaneously facilitating the processing of polyphenylene ethers.

Other such modifiers are also known. In, for example, U.S. Patent No. 3,658,945 of Nakashio et al., it is disclosed that alkenyl aromatic resins may be graft-modified onto ethylene-α-olefin-polyene terpolymer. They disclose that 0.5 to 15% of terpolymer by total composition weight, where the graft copolymer contains from 5 to 80% of styrene compound, is needed to enhance impact

strength at levels up to about 30% of styrene-EPDM graft copolymer by total composition weight.

Such graft copolymers are also described in U.S. Patent Nos. 3,943,191; 3,959,211; 3,974,235; 4,101,503; 4,101,504; 4,101,505; and 4,102,850 of Glenn D. Cooper et al. and elsewhere.

Compositions with a high polyphenylene ether content are particularly useful in applications requiring a high heat distortion temperature. Compositions in which the polyphenylene ether makes up more than about 75% of the total weight of resins, e.g., polyphenylene ether, styrene homopolymer or copolymer if present, etc., have high heat distortion temperatures and good physical properties, but tend to laminate; that is, they tend to form a layered structure upon molding. Lamination is undesirable because it may result in separation of the layers, impairing the integrity of the molded article, or in the appearance of unsightly "blisters" on the article surface. Incorporation of small amounts of polyethylene or other polyolefins as a processing aid in the compositions increases the tendency toward lamination. Improved compositions of this type therefore remain highly desirable.

## Introduction to the Invention

The present invention relates to improved thermoplastic compositions comprising an admixture of polyphenylene ether and alkenyl aromatic resin. The compositions also contain up to about 35% by resin weight of plasticizer. The plasticizer alleviates drawbacks of lamination of the molded compositions.

## Description of the Invention

The polyphenylene oxide resins useful in accordance with the present kinds of compositions are, as previously indicated, individually well known and readily available. There are, however, various preferred composition components. These are primarily ones commonly having applications for which high impact strength is particularly desirable.

The preferred polyphenylene ethers are homo- and copolymers of the formula:

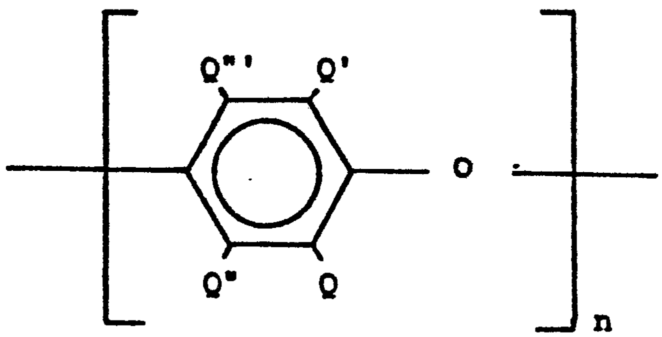

wherein Q, Q', Q" and Q"' are independently selected from the group consisting of hydrogen, hydrocarbon radicals, halohydrocarbon radicals having at least two carbon atoms between the halogen atom and the phenol nucleus, hydrocarbonoxy radicals and halohydrocarbonoxy radicals having at least two carbon atoms between the halogen atoms and the phenol nucleus, and Q', Q" and Q"' in addition may be halogen with the proviso that Q and Q' are preferably free of a tertiary carbon atom; and n represents the total number of monomer residues and is an integer of at least 50.

Especially preferred is poly(2,6-dimethyl-1,4-phenylene)ether.

The alkenyl aromatic resins and/or grafted portions thereof are likewise well known and are preferably derived from monomers of the formula:

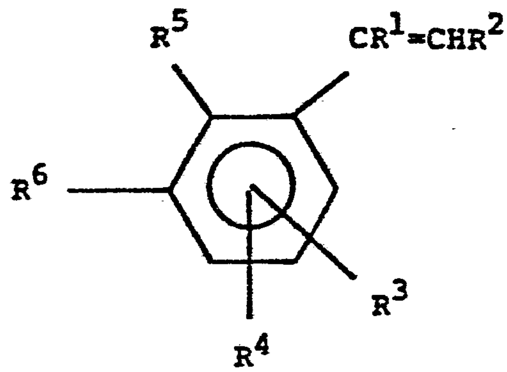

wherein $R^1$ and $R^2$ are selected from the group consisting of lower alkyl or alkenyl groups of from 1 to 6 carbon atoms and hydrogen. $R^3$ and $R^4$ are selected from the group consisting of chloro, bromo, hydrogen and lower alkyl of from 1 to 6 carbon atoms; $R^5$ and $R^6$ are selected from the group consisting of hydrogen and lower alkyl and alkenyl groups of from 1 to 6 carbon atoms or $R^5$ and $R^6$ may be concatenated together with hydrocarbyl groups to form a naphthyl group.

Specific examples of alkenyl aromatic monomers include styrene, chlorostyrene, alpha-methylstyrene, para-methylstyrene, vinyl xylene, divinylbenzene and vinyl naphthalene. Styrene is particularly preferred.

The rubbery interpolymers utilized in formation of the present grafted copolymers are formed from ethylene, alpha-olefin and polyene monomers. Preferred alpha-olefins have from 3 to 10 carbon atoms. Preferred polyenes are non-conjugated (either cyclic or open-chain) dienes. They desirably have 5 to 20 carbon atoms. These interpolymers are desirably composed of from 10 to 90 mole percent ethylene, 10 to 90 mole percent alpha-olefin and 0.1 to 10 mole percent polyene.

Alkenyl aromatic resin may be grafted onto such an interpolymer by polymerizing alkenyl aromatic monomer in its presence. This may be accomplished by dissolving the interpolymer in monomer and then polymerizing the mixture in the presence of an initiator.

The interpolymer may be polymerized with the alkenyl aromatic compound in virtually any proportion, to produce an interpolymer modified alkenyl aromatic compound. Preferably, the interpolymer comprises from about 8 to 70%, most preferably 10-50% of the total weight of the product, which consists of a gel portion of an interpolymer-alkenyl aromatic graft copolymer (particles of interpolymer-alkenyl aromatic graft copolymer containing occluded alkenyl aromatic), along with soluble alkenyl aromatic homopolymer. The interpolymer modified alkenyl aromatic resin may be used without further treatment; if a higher proportion of interpolymer is desired,the gel fraction of interpolymer-alkenyl aromatic graft copolymer may be separated from the soluble alkenyl aromatic homopolymer by extraction of the homopolymer in a suitable solvent, such as, for example, methyl ethyl ketone.

In forming the present compositions, the proportions of resins may vary within the described ranges. The polyphenylene ether makes up from 70 to 99% of the total weight of resins, the EPDM-styrene graft copolymer from 1 to 25%, and the polystyrene homopolymer from 0 to about 20%.

In accordance with the present invention, a plasticizer is also incorporated into the composition. Representative of such plasticizers are aromatic and alkylaromatic phosphates, phthalates, long chain

aliphatic hydrocarbons, e.g., mineral oil and, preferably, isopropylated triphenyl phosphate and/or triphenyl phosphate (Kronitex 50®, FMC).

Up to about 35% by resin weight of plasticizer has been found to be desirable. This amount of plasticizer will mitigate or eliminate the occurrence of lamination in molded articles formed from the present compositions. Such lamination is undesirable because it may affect the physical integrity of the article and/or be evidenced by blisters on the article surface. In addition, certain plasticizers may improve ancillary properties such as surface gloss, flame resistance, melt viscosity and the like.

Within the foregoing range, compositions containing from less than about 6%, more desirably about 1 to 4%, by resin weight of plasticizer have been discovered to exhibit significantly reduced lamination. Moreover, because increasing concentrations of plasticizer generally impair such important properties as heat distortion temperature, these lower concentrations are often preferred.

In general, addition of polystyrene to polyphenylene ether blends causes a decrease in the heat distortion temperature of the compositions. Moreover, in blends containing a high proportion of polyphenylene ether, the tendency to lamination increases as the proportion of EPDM rubber is increased. Surprisingly, however, in the plasticized compositions of the present invention, and especially those containing from about 7 to about 35% by weight of plasticizer, increasing the proportion of EPDM-polystyrene graft copolymer does not significantly affect either the heat distortion temperature or the tendency to lamination. Consequently, the amount of EPDM-polystyrene graft copolymer can be adjusted to whatever level is required to reach the desired

ductility and impact strength without adversely affecting other properties.

The compositions made according to the teachings of the present invention are preferably prepared first by fine admixture of their ingredients. This may, for example, be accomplished simply by coextrusion. A substantially homogeneous admixture is preferred.

Once prepared, the present compositions may be utilized for any of the diverse purposes for which similar polyphenylene ether/polyalkenyl aromatic resin compositions have already been employed. For example, they can be used in molding powder formulations, either alone or mixed with other polymers and may contain various fillers, such as wood flour, diatomaceous earth, carbon black, silica, etc. They are ordinarily used to prepare molded (by injection or compression) or extruded articles. These articles may take a broad spectrum of forms including sheets, rods, etc.

The present compositions may also be mixed with various fillers, modifying agents, etc. such as dyes, pigments, stabilizers, etc. All this may be performed in a conventional manner.

The following examples are given by way of illustration only and are not intended as a limitation on the scope of this invention. Many variations are possible without departing from its spirit and scope. Unless otherwise specified herein, all proportions are provided on a weight basis.

## EXAMPLE 1

Polystyrene made with 15% by weight of ethylene-propylene-5-ethylidene-2-norbornene interpolymer (Epcar 387 EPDM rubber produced by Goodrich) by the procedure described in U.S. Patent No. 4,101,503 is stirred for several hours in methyl ethyl ketone and the suspension centrifuged for several hours in a bottle centrifuge. The polystyrene solution is decanted and the gel resuspended and stirred for several hours in methyl ethyl ketone and again centrifuged and decanted. This process is repeated again and the gel fraction is shaken with methanol, filtered, washed repeatedly with methanol, and dried to yield a polystyrene interpolymer in the form of small particles of gel containing approximately equal weights of rubber and grafted and occluded polystyrene.

A mixture consisting of 3.33 parts of the gel fraction, 10 parts of the interpolymer modiifed polystyrene, and 86.67 parts of polyphenylene ether is extruded in a Brabender single-screw extruder and then molded in a screw injection molding machine to produce a control composition containing 3.2% rubber. A second blend is prepared in the same way, with the addition of 3 parts of triphenyl phosphate plasticizer.

/
/
/
/
/
/
/
/
/
/

The tendency to lamination is judged by making parallel cuts, about 3/8" apart, at the gate end of a 2-1/2" X 3-1/2" X 1/8" plaque, then grasping the tab with pliers and, by simultaneously twisting and pulling, breaking it from the plaque. The exposed surfaces are examined and the degree of lamination estimated, both in the interior portion of the plaque (core) and in the surface layers (skin). The process is then repeated at the "dead" end of the plaque, opposite the gate. "Severe" lamination indicates actual separation of the material into a number of thin sheets under the conditions of the test. "Moderate" lamination indicates distinct layering in the structure, but with little or no actual physical separation of the layers. The results are summarized below.

TABLE 4

| Property | Control Sample | Plasticizer-Containing Sample |
|---|---|---|
| Elongation (%) | 56 | 56 |
| Tensile Yield (psi) | 9,900 | 10,200 |
| Tensile Strength (psi) | 9,400 | 9.300 |
| Izod Impact (ft.lbs.in. of notch) | 5.2 | 4.8 |
| Gardner Impact (in.lbs.) | 375 | 325 |
| Gloss (45°) | 52 | 57 |
| HDT (°F) | 345 | 324 |
| M.V. (poise,580°F. 1500 $sec^{-1}$) | 5,000 | 3,700 |
| UL-94 | -- | V-O |
| Average Burn Time (seconds) | -- | 4.2 |
| Lamination (gate end, skin) | moderate | none |
| Lamination (gate end, core) | severe | slight or none |
| Lamination (dead end, skin) | moderate | none |
| Lamination (dead end, core) | none | none |

The results show the reduction in lamination achieved at even a very minor concentration of plasticizer for compositions of the present invention.

EXAMPLES 2-7

Six sample compositions are prepared as described in Example 1, using 80 parts of polyphenylene ether, 20 parts of interpolymer modified polystyrene described in Example 1, and various plasticizers and amounts as noted below. The results are summarized below.

TABLE 1

| Example | Elongation | Tensile Yield | Notched Izod | Gardner | Gloss | HDT | Lamination | | | |
|---|---|---|---|---|---|---|---|---|---|---|
| | | | | | | | Gate End | | Dead End | |
| | | | | | | | Skin | Core | Skin | Core |
| 2 | 47 | 10,800 | 4.1 | 225 | 53 | 333 | moderate | slight | slight | none |
| 3(3%TPP) | 33 | 11,000 | 4.5 | 350 | 55 | 306 | slight | none | none | none |
| 4(3%K-50) | 41 | 11,000 | 4.2 | 275 | 55 | 307 | slight | none | none | none |
| 5(5%TPP) | 46 | 10,800 | 4.3 | 300 | 59 | 291 | slight or none | none | none | none |
| 6 (1%TPP) | 44 | 11,000 | 4.0 | 300 | 55 | 310 | slight or none | none | none | none |
| 7(3%DOP) | 41 | 11,000 | 4.1 | 275 | 56 | 306 | slight | none | none | none |

K-50 = Kronitex 50 plasticizer produced by FMC (mixture of isopropylated triphenyl phosphates)

TPP = triphenyl phosphate plasticizer

DOP = dioctyl phthalate plasticizer

Elongation = %

Tensile yield = psi

Izod = notched Izod impact strength, ft.lbs./in. of notch

Gardner = Gardner impact strength, in.lbs.

Gloss = surface gloss at 45°

HDT = heat distortion temperature, °F.

These results indicate the substantial improvement in lamination achieved at low plasticizer content. As little as 1% of plasticizer is effective, as shown.

## EXAMPLE 8

Blends were extruded and molded as described in Example 1. Compositions were the same as in Example 1 except for the addition in each case of 1.5phr of polyethylene. The blend containing triphenyl phosphate had physical properties similar to those of the control blend, except for reduced HDT, improved gloss, ductility and tensile strength, and reduced tendency to lamination.

| Property | Control Blend | Example 8 |
|---|---|---|
| Elongation | 77 | 90 |
| T.Y. | 10,200 | 11,400 |
| Izod Impact Strength | 6.2 | 5.5 |
| Gardner Impact Strength | 300 | 400 |
| HDT | 343 | 326 |
| Gloss | 41.0 | 51.4 |
| Lamination, gate end (skin) | severe | slight |
| Lamination, gate end (core) | severe | moderate |
| Lamination, dead end (skin) | slight | none |
| Lamination, dead end (core) | severe | slight |

## EXAMPLE 9

A mixture of 96 parts of PPO and 4 parts of the EPDM-polystyrene graft copolymer described in Example 1

(50% EPDM, 50% polystyrene) and 3 parts of triphenyl phosphate was extruded and molded as described in Example 1.

A control blend was prepared in the same way, but without the triphenyl phosphate. The blend containing triphenyl phosphate had properties similar to the control blend, with less tendency to laminate. It had V-0 flammability rating by UL-94; the control was V-1.

| Property | Control Blend | Example 9 |
|---|---|---|
| Elonation | 43 | 57 |
| T.Y. | 10,600 | 11,800 |
| Izod Impact Strength | 3.8 | 4.6 |
| Gardner Impact Strength | 400 | 400 |
| HDT | 362 | 341 |
| Gloss | 55.2 | 56.4 |
| UL-94 | V-1 (10.6 sec.) | V-O (3.9 sec) |
| Lamination, gate end (skin) | severe | moderate |
| Lamination, gate end (core) | severe | moderate |
| Lamination, dead end (skin) | moderate | slight |
| Lamination, dead end (core) | moderate | none |

EXAMPLES 10-13

A polystyrene modified with 15% of EPDM interpolymer (EPCAR 387) (Example 1) is extracted according to procedure of Example 1.

The final dried gel is a white, fluffy powder containing rubber and polystyrene in an approximately 1:1 ratio by weight.

Sample compositions are then prepared containing 80 parts by weight of polyphenylene ether, 20 parts by weight of isopropylated triphenyl phosphates (Kronitex

50) with varying concentrations of this gel. After extrusion in a 3/4" Brabender extruder having a 1:1 compression screw at 420°F. set/130 screw rpm and molding in a 4 oz. Newbury machine at 480°F. set/200°F. mold set, the resultant physical properties are measured. The results are as follows:

TABLE 2

| Example | Concentration of gel, parts by weight | HDT | Izod | Tensile | | | MV at 540°F | | |
|---|---|---|---|---|---|---|---|---|---|
| | | | | % Elongation | Yield | Break | 100 Sec. | 1500 Sec.-1 | Degree of Lamination |
| 10 | -- | 213 | 0.7 | 43 | 11,000 | 8,200 | -- | -- | none |
| 11 | 2.9 | 212 | 1.5 | 21 | 10,000 | 8,000 | -- | -- | none |
| 12 | 7.3 | 212 | 2.8 | 86 | 9,300 | 8,800 | 6,800 | 1,750 | none |
| 13 | 14.9 | 218 | 6.8 | 79 | 7,900 | 8,100 | 8,400 | 1,880 | none |

These results show the beneficial effect of increasing proportions of interpolymer on an elevated plasticizer concentration. With elevated plasticizer, lamination problems are completely alleviated. Moreover, the interpolymer allows satisfactory retention of other physical properties so as to yield molded articles having a superior overall combination of properties.

EXAMPLES 14-17

Varying amounts of the gel obtained in Examples 10-13 are combined with 8 parts by weight of isopropylated triphenyl phosphates plasticizer (Kronitex 50), 0.15 part each of zinc oxide and zinc sulfide and sufficient polyphenylene ether to make up a total of 100 parts. The mixture is then processed in the equipment described in Examples 10-13 utilizing 530°F. set/130 screw rpm and 575°F. set/230°F. mold set.

Analysis of articles molded from the sample compositions shows the following:

TABLE 3

| | | | MV at 540°F | | | | | | | |
|---|---|---|---|---|---|---|---|---|---|---|
| Example | Conc. of Gel, parts by wt. | HDT | 100 $Sec^{-1}$ | 1500 $Sec^{-1}$ | Averaged 1/16" S.E. Times | Izod | Gardner | Flexural Modulus | 45° Gloss | Degree of Lamination |
| 14 | 5.7 | 299 | — | — | 2.1, V-O | 3.8 | 300 | 365,000 | 61.0 | negligible |
| 15 | 11.4 | 293 | 25,000 | 4,700 | 2.5, V-O | 7.0 | 300 | 320,000 | 60.3 | negligible |
| 16 | 17.1 | 294 | — | — | 2.3, V-O | 7.6 | 250 | 308,000 | 58.5 | negligible |
| 17 | 22.8 | 285 | 27,000 | 5,000 | 2.8, V-O | 9.4 | 250 | 248,000 | 57.7 | negligible |

These results again show the beneficial effects of increasing interpolymer concentration on high plasticizer-containing compositions of the present invention.

The above mentioned patents and/or publications are incorporated herein by reference. Obviously, other modifications and variations of the present invention are possible in light of the above teachings. For example, instead of poly(2,6-dimethyl-1,4-phenylene) ether there can be substituted poly(2,6-dimethyl-co-2,3,6-trimethyl-1,4-phenylene) ether copolymer. Instead of polystyrene, poly(alpha-methylstyrene) or poly(para-methylstyrene) can be substituted. It may be helpful to include small amounts, e.g., 0.5 to 3% by weight of a polyolefin, such as polyethylene. In addition, conventional reinforcements and/or fillers, flame retardants, stabilizers, colorants, impact modifiers can be used in conventional amounts. It is, therefore, to be understood that changes may be made in the particular embodiments of the invention described which are within the full intended scope of the invention as defined by the appended claims.

CLAIMS: 10152-8CN-3162

1. A thermoplastic composition comprising an admixture of

(a) from 70 to 99 percent by weight of polyphenylene ether resin;

(b) from 1 to 25 percent by weight of an alkenyl aromatic resin which has been modified with a rubbery interpolymer of ethylene, alpha-olefin and polyene;

(c) from 0 to 20 percent by weight of polystyrene homopolymer; and

(d) from 1 to 35 percent by weight of a plasticizer.

2. A composition according to Claim 1, in which the rubbery portion of the interpolymer modified alkenyl aromatic resin comprises from 8 to 70 percent by weight of said resin.

3. A composition according to Claim 1, in which the alkenyl aromatic resin is polystyrene.

4. A composition according to Claim 1, in which the polyphenylene ether resin is poly(2,6-dimethyl-1,4-phenylene ether).

5. The composition of Claim 1, wherein the polyene of the interpolymer comprises cyclopentadiene or ethylidene norbornene.

6. The composition of Claim 1, wherein the interpolymer comprises from about 10 to 90% ethylene, about 10 to 90 alpha-olefin and about 0.1 to 10% polyene by mole.

7. A composition according to Claim 1, in which the plasticizer is a triaryl phosphate.

8. A composition according to Claim 7, in which the triaryl phosphate is triphenyl phosphate.

9. A composition according to Claim 8, in which the triphenyl phosphate has been substituted with one or more isopropyl groups.

10. A composition according to Claim 1, which includes a polystyrene homopolymer.

11. The composition of Claim 1, wherein the plasticizer comprises less than about 6% by resin weight.

12. The composition of Claim 1, wherein the plasticizer comprises from 1 to 4% by resin weight.

13. The composition of Claim 1, wherein the plasticizer comprises from about 7 to 35% by resin weight.

14. A composition according to Claim 1, containing from 0.5 to 3 percent by weight of a polyolefin.

15. A composition according to Claim 14, in which the polyolefin is polyethylene.